# DEMANDE DE BREVET EUROPEEN

(11) **EP 1 670 261 A1**
(43) Date de publication de la demande: **14.06.2006**
(21) Numéro de dépôt: 05292640.9
(22) Date de dépôt: 12.12.2005
(51) Int. Cl.: H04N 9/31, G02B 7/00, G02B 27/18, G02B 5/20

(54) **Moteur optique pour appareil de projection d'images muni d'un filtre à déplacement linéaire**

(30) Priorité: 13.12.2004 FR 0413225
(71) Demandeur: Sagem SA, 75015 Paris (FR)
(72) Inventeur: Trouboul, Laurent, 75003 Paris (FR)
(74) Mandataire: Prieur, Patrick

(57) **Abrégé**

Moteur optique (1) pour appareil de projection d'images, comprenant :
- un filtre (2) chromatique comportant des suites identiques de secteurs se succédant immédiatement les unes aux autres suivant une direction de déplacement (10), les secteurs de chacune des suites étant juxtaposés, présentant entre eux une frontière sensiblement rectiligne s'étendant suivant une direction transversale (20) et ayant des bandes passantes différentes, et
- un dispositif (6) de déplacement auquel est lié le filtre (2) faisant translater le filtre (2) suivant la direction de déplacement (10), perpendiculaire à la direction transversale.
- des réflecteurs (8) arrangés sous forme de lignes (L₁, L₂, L₃, L_{y}) et commandés pour moduler des faisceaux lumineux (12) ayant traversé le filtre en les renvoyant ou non vers un écran (14).

## Description

L'invention concerne un moteur optique utilisé dans certains appareils de projection d'images tels que vidéo projecteurs et téléviseur à projection par l'arrière. Elle s'applique notamment aux appareils utilisant la technologie dite DLP™ ("Digital Light Processing", traitement numérique de la lumière) pour générer la modulation optique d'un faisceau lumineux à projeter.

Dans le cas de la technologie DLP, le moteur optique comporte une matrice de réflecteurs élémentaires orientables appelés DMD™ ("Digital Micromirror Device", dispositif numérique à micromiroirs), disposés en lignes et en colonnes. Chaque réflecteur est commandé en fonction de l'intensité lumineuse d'un pixel correspondant à l'image à projeter. Dans la plupart des appareils, la lumière provient d'une lampe délivrant une lumière blanche. Le modulateur DMD envoie vers un objectif de projection le faisceau de lumière issu de la lampe, modulé selon un signal vidéo pour produire une image sur un écran.

Pour obtenir une image en couleur, un filtre chromatique est placé sur le trajet optique entre la lampe et le modulateur. Ce filtre comporte une pluralité de secteurs juxtaposés ayant des bandes passantes différentes et présentant entre eux une frontière. De manière usuelle, les secteurs colorés filtrent la lumière blanche selon les trois composantes de couleur. Un dispositif de déplacement auquel est lié le filtre fait que des faisceaux rouge, vert et bleu sont envoyés en alternance sur le modulateur du fait du déplacement du filtre. Le modulateur est commandé en synchronisme avec le déplacement de la roue de façon à produire la modulation chromatique de l'image à partir des trois composantes de couleur du signal.

Lorsque la lumière qui atteint un réflecteur n'est pas une pure couleur primaire ou lorsqu'il existe une incertitude concernant sa couleur, du fait du passage d'une frontière entre deux secteurs, le réflecteur est commandé pour que le faisceau qui l'atteint ne soit pas transmis vers l'écran. Cette période pendant laquelle le faisceau n'est pas transmis doit être réduite autant que possible pour améliorer la luminosité et la saturation de l'image.

Il est connu d'utiliser un moteur électrique tournant à vitesse élevée en tant que dispositif déplaçant le filtre et d'utiliser un filtre se présentant sous forme d'une roue dont les différents secteurs constituent des secteurs angulaires.

Toutefois, la position de chaque frontière est assez difficile à déterminer, puisqu'elle se présente sous forme d'un rayon tournant, de sorte qu'il est nécessaire d'effectuer de nombreux calculs relativement complexes très rapidement ou de prendre une marge conséquente par rapport au passage des frontières.

Une solution pour réduire ce problème est décrite dans US- 6 642 969. Elle consiste à disposer les secteurs suivant des spirales d'Archimède. Toutefois, une roue présentant de telles spirales est très complexe à réaliser. De plus, la dimension de la roue devant rester relativement réduite, les spirales d'Archimède génèrent des frontières présentant une courbure non négligeable. Cette solution ne résout par conséquent que partiellement le problème posé.

D'autre part, le document WO-01/37576 divulgue un moteur optique comprenant :
- un filtre chromatique comportant une pluralité de secteurs juxtaposés ayant des bandes passantes différentes et présentant entre eux une frontière, lesdites frontières sont sensiblement rectilignes et s'étendent suivant une direction transversale,
- un dispositif de déplacement auquel est lié le filtre, pour faire translater le filtre suivant une direction de déplacement sensiblement perpendiculaire à la direction transversale, et
- des réflecteurs arrangés sous forme de lignes et commandés pour moduler des faisceaux lumineux ayant traversé le filtre en les renvoyant ou non vers un écran,

Ainsi, en disposant le filtre de sorte que les transitions d'une couleur à une autre s'étende parallèlement aux lignes de la matrice de réflecteurs, leur position par rapport à la matrice de réflecteurs est assez aisée à connaître sur l'ensemble de la matrice. En effet, elle sont identiques pour l'ensemble des colonnes et directement fonction du déplacement commandé par le dispositif de déplacement.

Afin d'améliorer la qualité de l'image, sans augmenter notablement le coût du moteur optique, conformément à l'invention, le filtre se présente comme des suites identiques de secteurs se succédant immédiatement les unes aux autres suivant la direction de déplacement, chaque suite comprenant une pluralité de secteurs juxtaposés ayant des bandes passantes différentes.

Ainsi, on limite l'amplitude de déplacement du filtre. On peut par conséquent réduire le temps nécessaire pour générer successivement les différentes couleurs sur chacun des réflecteurs et l'énergie dissipée par le dispositif de déplacement.

Selon une autre caractéristique conforme à l'invention, le moteur optique présente avantageusement les caractéristiques suivantes :
- deux suites successives sont décalées suivant la direction de déplacement d'un pas de répétition,
- le dispositif de déplacement génère une course en translation suivant la direction de déplacement correspondant à un nombre entier de pas de répétition.

Ainsi, on obtient aisément un équilibre entre les couleurs du filtre.

Selon une caractéristique complémentaire conforme à l'invention, le filtre comprend au moins cinq suites et le dispositif de déplacement comprend un moteur de type piézo-électrique dont la course en translation suivant la direction de déplacement est égale au pas de répétition de la suite.

Un moteur de type piézo-électrique est très précis et on déduit directement sa position de la consigne qui lui est appliquée. Les multiples suites de secteurs successives permettent de compenser l'amplitude de déplacement relativement faible d'un tel moteur.

Conformément à l'invention, selon une variante de réalisation, le moteur optique présente avantageusement les caractéristiques suivantes :
- le filtre comprend sensiblement autant de secteurs que le nombre de lignes de réflecteurs,
- le dispositif de déplacement génère suivant la direction de déplacement une succession de translations dont l'amplitude correspond à la largeur de chaque secteur suivant la direction de déplacement.

Ainsi, tous les réflecteurs sont atteints simultanément par un faisceau d'une couleur qui n'est pas purement primaire. Ils sont tous commandés simultanément pour ne pas transmettre le faisceau lumineux qui les atteint. Cette solution résout donc de façon particulièrement simple le problème des transitions entre deux couleurs.

Conformément à l'invention, le moteur optique présente avantageusement les caractéristiques suivantes :
- le filtre est de type dichromatique et chaque suite comprend :
   - un premier secteur laissant passer une gamme de longueurs d'onde correspondant à la couleur rouge, le premier secteur réfléchissant les longueurs d'ondes visibles autres que celles correspondant à la couleur rouge,
   - un deuxième secteur laissant passer une gamme de longueurs d'onde correspondant à la couleur verte, le deuxième secteur réfléchissant les longueurs d'ondes visibles autres que celles correspondant à la couleur vert,
   - un troisième secteur laissant passer une gamme de longueurs d'onde correspondant à la couleur bleue, le troisième secteur réfléchissant les d'ondes longueurs visibles autres que celles correspondant à la couleur bleu,
- le moteur optique comprend en outre un intégrateur sensiblement tubulaire pour renvoyer les longueurs d'ondes réfléchies par un des secteurs du filtre vers un autre secteur du filtre, ledit intégrateur comprenant une surface intérieure réfléchissante de forme cylindrique s'étendant suivant une direction longitudinale perpendiculaire à la direction de déplacement et à la direction transversale entre une première extrémité et une deuxième extrémité,
- le moteur optique comprend en outre une source de lumière blanche placée sensiblement à la première extrémité et le filtre est placé sensiblement à la deuxième extrémité.

Ainsi, on augmente notablement l'énergie lumineuse transmise aux réflecteurs pour une même source de lumière. On améliore par conséquent l'image tout en réduisant la consommation et l'usure de source de lumière.

D'autres particularités et avantages de la présente invention apparaîtront dans la description ci-après d'exemples de réalisation non limitatifs, en référence aux dessins annexés dans lesquels :
- la figure 1 est une représentation schématique d'un moteur optique selon l'invention,
- les figures 2 à 4 sont des vues selon le plan repéré II-II à la figure 1 et représentent un filtre chromatique dans trois positions successives,
- les figures 5 à 7 représentent selon le plan repéré II-II à la figure 1 une variante de filtre chromatique dans trois positions successives.

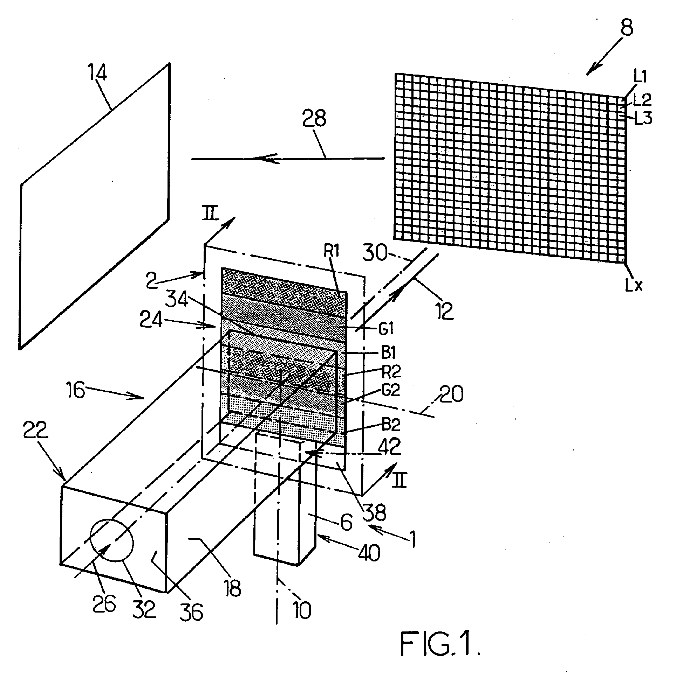

La figure 1 illustre un moteur optique 1 de télévision à projection par l'arrière. Ce moteur optique 1 comprend une source de lumière blanche schématisée par la flèche repérée 26, un intégrateur 16 dans lequel la source de lumière 26 émet ses rayons lumineux, un filtre chromatique 2 comprenant une pluralité de secteurs R₁, G₁, B₁, R₂, G₂, B₂ filtrant les rayons lumineux émis par la source de lumière 26, un moteur de type piézoélectrique 6 et un modulateur de lumière 8 renvoyant certains faisceaux lumineux filtrés 12 vers un écran 14 tel qu'illustré par la flèche repérée 28.

L'intégrateur 16 est de forme sensiblement tubulaire et de section intérieure rectangulaire. Il s'étend suivant une direction longitudinale 30 entre une extrémité amont 22 et une extrémité aval 24. Sa surface intérieure 18 est réfléchissante aux rayons lumineux, par exemple de type miroir. Il présente à son extrémité avant 22 une surface amont 36 réfléchissante s'étendant sensiblement perpendiculairement à la direction longitudinale 30, dans laquelle est ménagée une ouverture amont 32 en regard de laquelle est disposée la source de lumière 26. L'intégrateur 16 présente à son extrémité aval 24 une ouverture aval 34 en regard de laquelle le filtre 2, sensiblement plan, s'étend perpendiculairement à la direction longitudinale 30.

Le filtre 2 comprend un secteur rouge R₁, R₂ filtrant les faisceaux lumineux émis par la source de lumière 26 pour laisser passer ceux ayant une fréquence correspondant à la couleur rouge et réfléchissant ceux correspondant aux couleurs verte et bleue, un secteur vert G₁, G₂ laissant passer la couleur verte et réfléchissant les couleurs rouge et bleue et enfin un secteur bleu B₁, B₂ laissant passer la couleur bleue et réfléchissant les couleurs rouge et verte. Ces secteurs R₁, G₁, B₁, R₂, G₂, B₂ s'étendent suivant une direction transversale 20 perpendiculaire à la direction longitudinale 30. Des frontières 4 s'étendent entre les différents secteurs du filtre 2.

Le moteur 6 présente une extrémité fixe 40 et une extrémité libre 42. Son extrémité libre 42 supporte une bande marginale 38 du filtre 2. Ainsi, le déplacement du filtre 2 est directement proportionnel à la tension appliquée entre l'extrémité 40 et l'extrémité libre 42 du moteur piézoélectrique 6.

Le modulateur de lumière 8 comprend des microréflecteurs disposés en ligne L₁, L₂, L₃, ... Lₓ, de préférence au nombre de 1 280 et de colonnes, de préférence au nombre de 1 024. Les microréflecteurs sont commandés en ouverture/fermeture en fonction de l'intensité lumineuse nécessaire en chaque couleur pour recréer chacun des points de l'image à former sur l'écran 14.

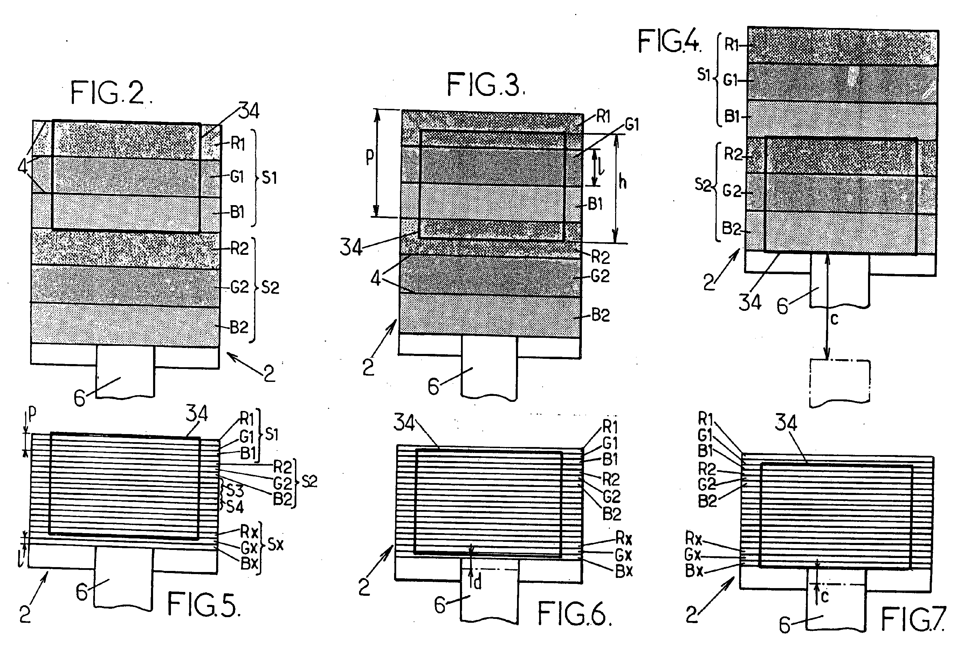

Dans le mode de réalisation illustré aux figures 2 à 4, le filtre 2 comprend deux séries S₁, S₂ de trois secteurs. Le pas P de chaque série suivant la direction de déplacement 10 équivaut au triple de la largeur 1 de chaque secteur suivant cette direction et est égal à la hauteur h de l'ouverture 34 toujours suivant la direction de déplacement 10.

Dans la configuration illustrée à la figure 2, le premier tiers des lignes du modulateur de lumière 8 reçoit des faisceaux lumineux filtrés par le filtre rouge R₁, le deuxième tiers des faisceaux lumineux filtrés par le filtre vert G₁, le troisième tiers des faisceaux lumineux filtrés par le filtre bleu B₁.

Tel qu'illustré à la figure 3, le moteur 6 commande le déplacement du filtre 2 suivant la direction de déplacement 10. Chaque microréflecteur du modulateur de lumière 8 est commandé en ouverture/fermeture en fonction de l'intensité lumineuse nécessaire dans la couleur du faisceau lumineux 12 qui leur parvient pour recréer le point correspondant sur l'écran 14. Les lignes de réflecteurs recevant un faisceau lumineux 12 ayant traversé une frontière 4 entre deux secteurs du filtre 2 sont inactifs et commandés à la fermeture pour ne transmettre aucun faisceau lumineux sur l'écran 14. Bien entendu, ces lignes changent au fur et à mesure du déplacement du filtre 2 suivant la direction de déplacement 10. Lorsque le filtre 2 s'est déplacé d'une course C correspondant au pas p des suites S₁, S₂ de secteurs du filtre 2, tel qu'illustré à la figure 4, le moteur 6 cesse son déplacement suivant la direction de déplacement 10 et repart en sens inverse pour former de manière similaire l'image suivante.

Afin de réduire la course C dont le filtre se déplace, on peut, tel qu'illustré à la figure 5, réduire la largueur 1 des secteurs R₁, G₁, B₁, R₂, G₂, B₂, ..., Rₓ, Gₓ, Bₓ et par voie de conséquence le pas p des suites S₁, S₂, S₃, S₄, ..., Sₓ de secteurs. En effet, la distance C dont se déplace l'extrémité libre 42 du moteur 6 est avantageusement un multiple entier de du pas p et de préférence égal à 1. Ainsi, en augmentant le nombre de suites S₁, S₂, S₃, S₄, ..., Sₓ de secteurs R₁, G₁, B₁, R₂, G₂, B₂, ..., Rₓ, Gₓ, Bₓ, on réduit l'amplitude de déplacement demandé à l'extrémité libre 42 du moteur 6. Afin, de conserver une efficacité maximale à l'intégrateur 16, la hauteur h est avantageusement un multiple entier du pas p.

Avantageusement, la course C du moteur 6 est proche de 200 microns ± 100 microns, la hauteur h de l'ouverture 34 est d'environ 4,5 millimètres et donc le nombre de suite est d'environ une vingtaine (entre 10 et 40).

A l'extrême, suivant une variante de réalisation, le nombre de suites S₁, S₂, S₃, S₄, ..., Sₓ est déterminé de telle sorte que le nombre de secteurs R₁, G₁, B₁, R₂, G₂, B₂, ..., Rₓ, Gₓ, Bₓ, est sensiblement égal au nombre de lignes lₓ du modulateur de lumière. Tel qu'illustré illustré aux figures 5 à 7 représentant les trois uniques positions du filtre 2 dans lequel les microréflecteurs du modulateur de lumière 8 transmettent un faisceau sur l'écran 14, le moteur piézoélectrique 6 se déplace alors par incrément d'une distance d correspondant à la largeur 1 de chaque secteur suivant la direction de déplacement 10.

Pour chacune des positions, les faisceaux lumineux 12 traversant les frontières 4 entre deux secteurs s'étendent entre deux rangées L₁, L₂, L₃, ..., Lₓ du modulateur de lumière, de sorte que tous les microréflecteurs sont actifs simultanément. En revanche, lorsque le moteur 6 se déplace d'une position à l'autre, tous les réflecteurs du modulateur de lumière 8 sont inactifs et placés dans une position telle qu'aucun faisceau 28 n'est envoyé sur l'écran 14. Le moteur 6 n'a alors besoin de se déplacer d'une course C correspondant à deux pas d.

Bien entendu, l'invention n'est pas limitée au mode de réalisation qui vient d'être décrit à titre illustratif et non limitatif. Ainsi, on pourrait utiliser un filtre ne comprenant qu'une seule série. Avantageusement, le filtre comprendrait toutefois à ses deux extrémités le même secteur. Mais, l'efficacité de l'intégrateur est alors notablement réduite.

## Revendications

1. Moteur optique (1) pour appareil de projection d'images, comprenant :
- un filtre (2) chromatique comportant une pluralité de secteurs (R₁, G₁, B₁, R₂, G₂, B₂, Rₓ, Gₓ, Bₓ) juxtaposés ayant des bandes passantes différentes et présentant entre eux une frontière (4), lesdites frontières (4) sont sensiblement rectilignes et s'étendent suivant une direction transversale (20),
- un dispositif (6) de déplacement auquel est lié le filtre (2), pour faire translater le filtre (2) suivant une direction de déplacement (10) sensiblement perpendiculaire à la direction transversale (20), et
- des réflecteurs (8) arrangés sous forme de lignes (L₁, L₂, L₃, L_{y}) et commandés pour moduler des faisceaux lumineux (12) ayant traversé le filtre en les renvoyant ou non vers un écran (14),
ledit moteur optique étant **caractérisé en ce que** le filtre (2) se présente comme des suites (S₁, S_{2 ;} S₁, S₂, S₃, S₄, Sₓ) identiques de secteurs se succédant immédiatement les unes aux autres suivant la direction de déplacement (10), chaque suite comprenant une pluralité de secteurs (R₁, G₁, B₁ ; R₂, G₂, B₂ ; Rₓ, Gₓ, Bₓ) juxtaposés ayant des bandes passantes différentes.

2. Moteur optique selon la revendication 1,
**caractérisé en ce que** :
- deux suites successives sont décalées suivant la direction de déplacement d'un pas de répétition (p),
- le dispositif de déplacement génère une course (C) en translation suivant la direction de déplacement correspondant à un nombre entier de pas de répétition (p).

3. Moteur optique selon la revendication 2,
**caractérisé en ce que** :
- le filtre comprend au moins cinq suites (S₁, S₂, S₃, S₄, Sₓ),
- le dispositif de déplacement comprend un moteur (6) de type piézo-électrique dont la course (C) en translation suivant la direction de déplacement (10) est égale au pas de répétition de la suite.

4. Moteur optique selon la revendication 1,
**caractérisé en ce que** :
- le filtre comprend sensiblement autant de secteurs (R₁, G₁, B₁, R₂, G₂, B₂, Rₓ, Gₓ, Bₓ) que le nombre de lignes de réflecteurs (L₁, L₂, L₃, L_{y}),
- le dispositif (6) de déplacement génère suivant la direction de déplacement (10) une succession de translations (d) dont l'amplitude correspond à la largeur (1) de chaque secteur suivant la direction de déplacement (10).

5. Moteur optique selon l'une quelconque des revendications précédentes, **caractérisé en ce que** chaque suite (S₁, S₂ ; S₁, S₂, S₃, S₄, Sₓ) comprend :
- un premier secteur (R₁, R₂ ; R₁, R₂, Rₓ,) laissant passer une gamme de longueurs d'onde correspondant à la couleur rouge,
- un deuxième secteur (G₁, G₂ ; G₁, G₂, Gₓ) laissant passer une gamme de longueurs d'onde correspondant à la couleur verte,
- un troisième secteur (B₁, B₂ ; B₁, B₂, Bₓ) laissant passer une gamme de longueurs d'onde correspondant à la couleur bleue.

6. Moteur optique selon la revendications 5,
**caractérisé en ce que** :
- le filtre (2) est de type dichromatique, pour chacune des suites, le premier secteur (R₁, R₂ ; R₁, R₂, Rₓ,) réfléchit les longueurs d'ondes visibles autres que celles correspondant à la couleur rouge, le deuxième secteur (G₁, G₂; G₁, G₂, Gₓ) réfléchit les longueurs d'ondes visibles autres que celles correspondant à la couleur vert, le troisième secteur (B₁, B₂ ; B₁, B₂, Bₓ) réfléchit les d'ondes longueurs visibles autres que celles correspondant à la couleur bleu,
- le moteur optique comprend en outre un intégrateur (16) sensiblement tubulaire pour renvoyer les longueurs d'ondes réfléchies par un secteur du filtre vers un autre secteur du filtre, ledit intégrateur comprenant une surface intérieure (18) réfléchissante de forme cylindrique s'étendant suivant une direction longitudinale (30) perpendiculaire à la direction de déplacement (10) et à la direction transversale (20) entre une première extrémité (22) et une deuxième extrémité (24),
- le moteur optique comprend en outre une source (26) de lumière blanche placée sensiblement à la première extrémité (22) et le filtre (2) est placé sensiblement à la deuxième extrémité (24).
